# Europäisches Patentamt
# European Patent Office
# Office européen des brevets

(11) Numéro de publication: **0 017 669**
**B1**

(12) **FASCICULE DE BREVET EUROPEEN**

(45) Date de publication du fascicule du brevet: **27.07.83**

(21) Numéro de dépôt: **79105169.1**

(22) Date de dépôt: **14.12.79**

(51) Int. Cl.³: **B 41 J 3/04**

(54) Vanne d'arrêt pour buse d'imprimante à projection d'encre.

(30) Priorité: **21.02.79 US 12987**

(43) Date de publication de la demande:
**29.10.80 Bulletin 80/22**

(45) Mention de la délivrance du brevet:
**27.07.83 Bulletin 83/30**

(84) Etats contractants désignés:
**DE FR GB**

(56) Documents cités:
**DE - A - 2 527 079**
**DE - A - 2 714 344**
**DE - B - 2 321 273**

**IBM TECHNICAL DISCLOSURE BULLETIN, Vol. 22, No. 3, aoÛt 1979 New York G. B. LAMMERS "Multi-nozzle segmented slider valve" pages 917 à 918**
**IBM TECHNICAL DISCLOSURE BULLETIN, Vol. 16, No. 2, July 1973.**

(73) Titulaire: **International Business Machines Corporation**
**Old Orchard Road**
**Armonk, N.Y. 10504 (US)**

(72) Inventeur: **Campbell Alan, Stirling**
**1757 Brynell Drive**
**Lexington KY 40505 (US)**
Inventeur: **Jennings Jack, Harley**
**108 Loch Lomond Drive**
**Lexington KY 40503 (US)**

(74) Mandataire: **Vekemans, André**
**COMPAGNIE IBM FRANCE Département de Propriété Industrielle**
**F-06610 La Gaude (FR)**

Vanne d'arrêt pour buse d'imprimante à projection d'encre

Domaine technique

La présente invention concerne les imprimantes à projection d'encre et, plus particulièrement, un vanne d'arrêt destinée à la buse d'éjection d'encre que comporte la tête d'impression d'une telle imprimante.

Etat de la technique antérieure

Lors de la mise en fonction et hors fonction d'une imprimante à projection d'encre, telle que l'imprimante IBM 6640, quelques gouttes d'encre s'écoulent de la buse et se déposent sur les parties voisines de la machine. En général, la vanne d'arrêt que comporte le circuit d'encre de l'imprimante est disposée avant la tête d'impression, qui est remplie d'encre. On peut éviter cet écoulement d'encre en disposant la vanne aussi près que possible de l'orifice de sortie de la buse, ce qui offre également l'avantage de permettre d'isoler de l'atmosphère la buse et la chambre qui se trouve à l'intérieur de la tête d'impression. On peut de la sorte éviter que l'encre contenue dans la buse et dans l'orifice de sortie de cette dernière ne sèche prématurément et ne provoque des obstructions.

Le brevet US.A. 4 045 802 décrit un élément que l'on dispose contre la tête d'impression pour empêcher l'air de pénétrer dans cette dernière, mais sans s'opposer à la sortie du jet d'encre. Par ailleurs, la publication intitulée "IBM Technical Disclosure Bulletin", Vol. 16, No. 2, Juillet 1973, pages 467—468, décrit une vanne électro-magnétique qui provoque une déviation du jet d'encre sortant de la buse, sans toutefois intercepter celui-ci. Le même Bulletin, Vol. 18, No. 12, Mai 1976, pages 4138—4139, décrit un élément en forme de disque qui recouvre les orifices de sortie des buses multiples d'une imprimante à projection d'encre et qui comporte une chambre dans laquelle l'encre sortant desdits orifices peut continuer à couler, l'objet dudit élément étant d'inverser le sens dans lequel circule l'encre à l'intérieur de la tête de manière à provoquer un nettoyage des orifices de sortie des buses et à déloger les obstructions qu'ils pourraient comporter. La lame de la présente invention évite la formation de telles obstructions. Le Bulletin précité, Vol. 19, No. 7, Décembre 1976, pages 2788—2789, décrit un élément qui est disposé à l'intérieur de la tête d'impression et qui a pour but d'empêcher le jet d'encre de sortir de la buse, mais qui ne permet pas d'éviter qu'une certaine quantité d'encre ne s'écoule de son orifice de sortie. Le même Bulletin, Vol. 20, No. 2, juillet 1976, pages 786, 787 et 788, décrit d'autre part un élément analogue destiné à empêcher le jet d'encre de sortir de la buse.

Le document DE—B—2 321 273 décrit également un dispositif susceptible d'être disposé contre la tête d'impression d'une imprimante lorsque celle-ci n'est pas en fonction.

Aucun des agencements précités ne fait appel à l'emploi d'une vanne qui exerce une pression sur l'orifice de sortie proprement dit de la buse et qui, de ce fait, empêche effectivement l'encre de sortir de celui-ci, indépendamment de la pression à laquelle l'encre est maintenue.

Exposé de l'Invention

L'Un des principaux objets de la présente invention est donc de fournir une vanne telle que celle définie dans la revendication 1.

Un autre objet de la présente invention est de fournir une buse d'éjection d'encre utilisable avec ladite vanne de telle sorte que l'ouverture ou la fermeture rapide de cette dernière puisse avoir lieu sans qu'il en résulte un écoulement d'encre indésirable ou la formation d'un brouillard d'encre intempestif.

Un autre objet de la présente invention est de fournir une vanne assurant l'étanchéité de l'orifice de sortie de la buse de l'imprimante à projection d'encre de manière à éviter toute obstruction résultant du séchage de l'encre lorsqu'elle est mise en contact avec l'atmosphère.

D'autres objets, caractéristiques et avantages de la présente invention ressortiront mieux de l'exposé qui suit, fait en référence aux dessins annexés à ce texte, qui représentent un mode de réalisation préféré de celle-ci.

Brève description des figures

La Figure 1 est une coupe schématique d'une imprimante à projection d'encre typique incorporant la présente invention.

La Figure 2 est une vue en perspective d'une réalisation préférée de la vanne de la présente invention.

La Figure 3 est une coupe schématique du dispositif de la Figure 2 pris suivant la ligne 3—3.

Les Figures 4A et 4B représentent schématiquement le dispositif illustré par les Figures 1 à 3 et montrent respectivement une première position de la vanne, dans laquelle le jet d'encre sort normalement de la buse, et une seconde position, dans laquelle le jet est intercepté et ne peut pas sortir de la buse.

La Figure 5 représente schématiquement une partie d'une variante de la présente invention.

La Figure 6 représente schématiquement une autre variante de l'invention.

Description de l'invention

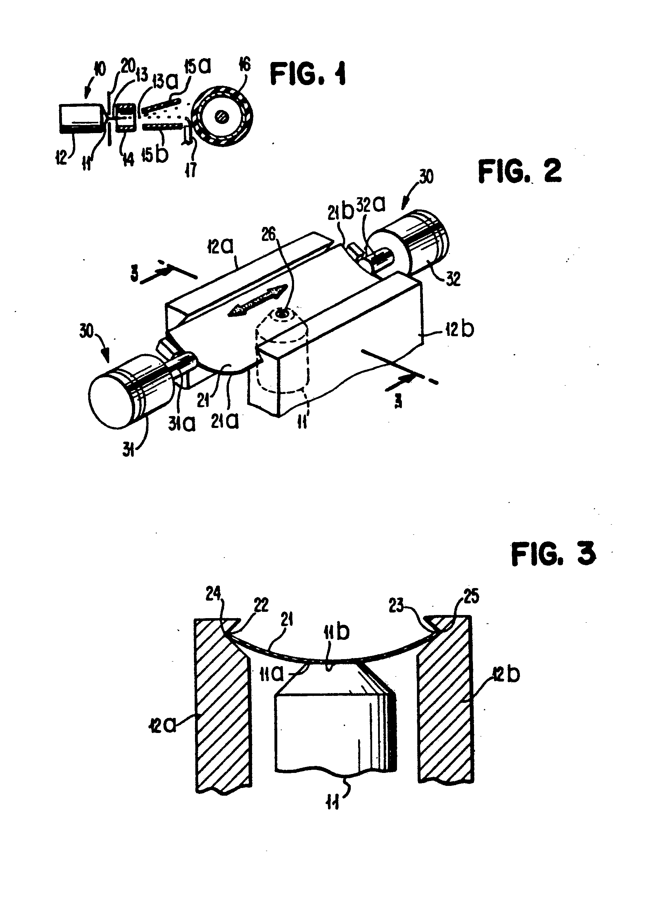

On a schématiquement représenté sur la Figure 1 une imprimante à projection d'encre 10 du type à balayage continu ou à la volée décrit dans le brevet US—A—3 596 275. Dans ce type d'imprimante, un chariot ou autre organe analogue (non représenté) porte les éléments d'impression qui comprennent une buse 11 connectée à une tête d'impression 12 comportant une chambre (non représentée) qui contient de l'encre sous pression qu'elle reçoit d'un circuit d'encre (non représenté) comportant une pompe ou autre dispositif analogue. Un jet d'encre 13 sort de la buse 11 et, en raison des perturbations de pression dont il fait l'objet, se divise en un certain nombre de gouttelettes d'encre 13a qui traversent une électrode de charge 14, puis des électrodes de déviation 15a et 15b avant de frapper le support d'impression, lequel est constitué, dans l'example représenté, par une feuille de papier disposée sur une platine 16. L'électrode de charge 14 permet d'appliquer aux gouttelettes d'encre 13a une charge d'un niveau prédéterminé. Les électrodes de déviation 15a et 15b, entre lesquelles existe un champ électrique résultant de l'application d'une tension élevée aux bornes de ces électrodes, provoquent une déviation vers le haut des gouttelettes auxquelles une charge a été appliquée, ce qui a pour effet de provoquer la formation d'une colonne de points ou de tâches d'encre sur le support d'impression. Le chariot (non représenté), sur lequel sont disposés la buse 11, la tête d'impression 12, électrode de charge 14, les électrodes de déviation 15a et 15b et une gouttière 17, se déplace parallélement à la platine 16 de manière à permettre l'impression de caractères ou de symboles sur le support d'impression recouvrant celle-ci, par exemple en déviant les gouttelettes d'encre verticalement, celles auxquelles aucune charge n'a été appliquée ne subissant aucune déviation et étant interceptées par la gouttière 17, qui les réintroduit dans le circuit 30 en vue de leur réutilisation. Un système typique de recirculation d'encre utilisé dans ce type d'imprimante est décrit dans le brevet US—A—3 929 071. En principe, le circuit d'encre comprend une vanne ou autre élément analogue que l'on dispose à proximité immédiate de la tête d'impression 12 de manière à interrompre l'émission d'encre lorsqu'on le désire. Lorsqu'on interrompt la circulation de l'encre en amont de la tête, quelle qui puisse être la rapidité d'action de la vanne, une certaine pression continue à exister dans la tête d'impression, et il se produit de ce fait un certain écoulement d'encre, qui tombre sur les parties de la machine qui sont voisines de la buse. Après un certain temps, cette accumulation d'encre peut provoquer des problèmes électriques tels que des courts-circuits ou des problèmes afférents à l'application d'une charge aux gouttelettes 13a lorsque celles-ci se séparent du jet d'encre 13. Par ailleurs, lorsqu'on cesse d'utiliser l'imprimante pendant un certain temps, (week-end, etc.) l'encre contenue dans la buse et dans la tête d'impression est exposée à l'air et sêche, ce qui se traduit par la formation, dans la buse, d'une obstruction en forme de croûte qui peut poser des problèmes lors de la remise en service de l'imprimante (à savoir la formation d'un brouillard d'encre dû au fait que le jet d'encre ne traverse qu'une partie de ladite obstruction, de l'encre se trouvant alors projetée sur les électrodes de charge et de déviation).

Selon la présente invention, une vanne 20 qui entre en contact avec l'orifice de sortie de la buse 11 permet le cas échéant d'interrompre rapidement l'emission du jet d'encre, la tête d'impression et le circuit d'encre se trouvant alors effectivement isolés de l'atmosphère. A cette fin, comme le montre la Figure 2, qui représente la réalisation préférée de la vanne 20 de la Figure 1, cette vanne comprend un élément mince et élastique 21, présentant de préférence une section arquée, et dont les bords longitudinaux 22 et 23 coulissent respectivement dans des rainures 24 et 25 qui existent respectivement dans des projections 12a et 12b que comporte la tête 12. Comme le montre plus clairement la Figure 3, la buse 11 comporte un ajutage 11a définissant un orifice de sortie 11b et, ainsi qu'on le verra plus loin, constituant une surface d'appui pour l'élément 21.

Ce dernier peut passer d'une première position, dans laquelle le jet d'encre peut sortir normalement de l'orifice 11b de la buse, à une seconde position, dans laquelle il est appliqué contre ladite surface d'appui 11a de telle sorte qu'il ferme de façon étanche l'orifice de sortie de la buse et interdit par conséquent toute émission d'encre.

A cette fin, l'élément 21 comporte une ouverture 26 dont le diamètre est au moins égal à celui de l'orifice de sortie 11b de la buse 11 et qui peut être aligné avec l'orifice 11b lorsque l'élément 21 occupe ladite première position, cependant que, lorsqu'il occupe ladite seconde position, l'élément 21 ferme de façon étanche l'orifice de sortie 11b et repose sur la surface d'appui 11a.

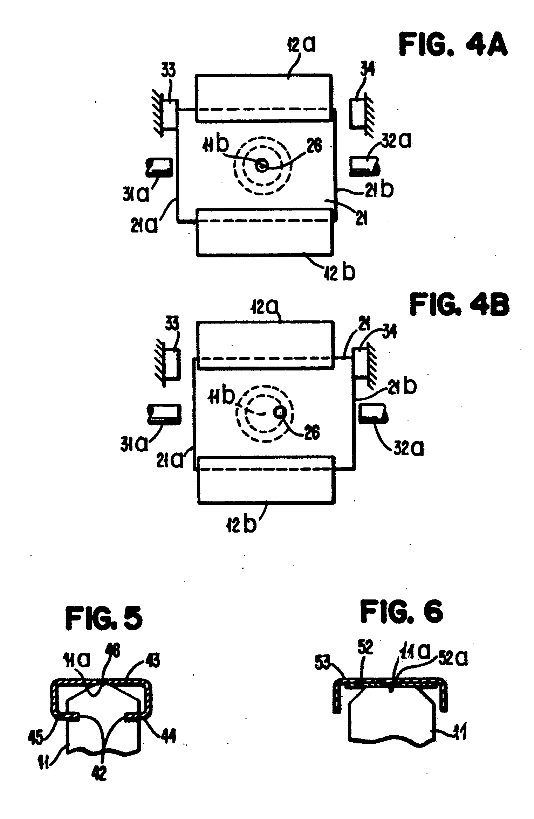

Comme le montrent notamment les Figures 2 et 4, le passage de l'élément 21 d'une position à l'autre (voir Figures 4A et 4B) est assuré par un mécanisme moteur 30 qui, dans le présent exemple comprend une paire de solénoïdes 31 et 32 comportant, de façon classique, des noyaux 31a et 32a faisant saillie et des ressorts de rappel (not représentés) disposés à l'intérieur desdits solénoïdes. Les noyaux 31a et 32a sont de préférence disposés à proximité immédiate des extrémités latérales 21a et 21b de l'élément 21, sans toutefois toucher ces dernières, de telle sorte que, lors de l'excitation de l'un ou de l'autre des solénoïdes, le noyau 31a ou 32a soit entraîné sur une faible distance par un courant d'excitation, le noyau accélérant alors avant de frapper l'extrémité 21a ou 21b. Afin de limiter le déplacement de l'élément 21 de telle sorte que, lorsque celui-ci occupe la première position représentée sur la Figure 4A, l'ouverture 26 soit alignée avec précision avec l'orifice de sortie 11b de la buse, des butées 33 et 34 sont prévues aux extrémités opposées de l'élément 21 et sont séparées de celles-ci par un intervalle approprié; de la sorte, lorsque le noyau 32a du solénoïde 32 est entré en contact avec le bord 21b de l'élément 21, repoussant ce dernier vers la gauche (dans le cas de la Figure 4A), l'ouverture 26 se trouvant alors alignée avec l'orifice de sortie 11b de la buse, le bord 21a de l'élément 21 entre en contact avec la butée 33, ce qui a pour effet d'assurer un alignement précis. Inversement, comme le montre la Figure 4B, lorsque le noyau 31a du solénoïde 31 a été excité de manière à frapper le bord 21a de l'élément 21, ce dernier est repoussé vers la seconde position et son bord· 21b entre en contact la butée 34, ce qui a pour effet de limiter le déplacement de l'élément 21 et d'assurer un alignement précis.

Quel que soit le type de mécanisme moteur employé, il est indispensable que celui-ci permette d'obtenir une interruption et un rétablissement du jet d'encre à un rythme extrêmement rapide afin qu'aucun écoulement intempestif ne se produise dans le cas d'une interruption et qu'aucune déviation intempestive ne se produise lors du rétablissement du jet. Par ailleurs, l'élément 21 permet, en raison de sa souplesse et de sa forme incurvée, d'assurer l'étanchéité de la buse lorsqu'il occupe ladite seconde position et est mis en contact avec la surface d'appui 11a qui définit l'orifice de sortie 11b.

A cet égard, l'élément 21 peut éventuellement être constitué par une matière plastique ou par du papier plastifié très mince, ou encore par un métal ou autre matière analogue compatible avec le type d'orifice de sortie de la buse et le type d'encre employés. A titre d'exemple, dans une réalisation effective l'invention, l'élément 21 se composait de mylar et présentait une épaisseur de 0,0635 mm, une longueur de 7,62 mm (bord 22 ou 23), et une largeur de 1,778 mm (bord 21a ou 21b). Un tel élément devrait permettre d'obtenir un joint étanche en présence d'une pression de 5,62 kg/cm² pendant 30 mn ou davantage, et le déplacement rapide de la vanne ne devrait provoquer qu'une déviation minime du jet d'encre. Par ailleurs, le mécanisme moteur pourrait se composer, par example, d'un solénoïde à double action qui serait connecté à l'élément 21 afin de lui permettre de se déplacer entre ces première et seconde positions, ou de tout autre dispositif permettant d'obtenir un mouvement rapide dudit élément entre ces deux positions. Les solénoïdes 31 et 32 constituent néanmoins le mécanisme moteur préféré.

Les Figures 5 et 6 représentent d'autres réalisations de la présente invention. Comme le montre la Figure 5, la paroi de la buse 11 comporte des rainures 42, et l'élément 21 des Figures 2 à 4 est ici remplacé par un élément souple 43 dont les bras 44 et 45 sont tournés vers l'intérieur et coulissent dans les rainures 42. De même que l'élément 21, l'élément 43 comporte une ouverture 46 qui, lorsqu'il occupe une première position, se trouve alignée avec l'orifice de sortie 11a de la buse 11; lorsqu'il occupe une seconde position, l'élément 43 est maintenu contre la surface d'appui qui définit l'orifice de sortie 41a er ferme de façon étanche la buse 11.

On a représenté sur la Figure 6 une buse 11 comportant un orifice de sortie 11a. Un élément 52, analogue aux éléments 21 et 43 et faisant fonction de vanne d'arrêt, comporte une ouverture 52a qui peut être alignée, lorsque l'élément 52 occupe la position représentée sur la Figure 6, de telle sorte qu'elle permette au jet d'encre de sortir de la buse 51. Comme le montre la figure, l'élément 52 est maintenu contre la surface d'appui définissant l'orifice de sortie 11a de la buse 11, au moyen par exemple d'une plaque de pression 53. Dans les deux réalisations représentées sur les Figures 5 et 6, les éléments 43 et 52 peuvent se déplacer entre les première et seconde positions précédemment définies correspondant respectivement à l'interruption et au rétablissement du jet d'encre. Par ailleurs, dans le cas de la Figure 5, le déplacement de l'élément 43 peut être obtenu au moyen de la même façon que dans le cas de l'élément 21. Cependant, dans le cas de la réalisation représenté sur la Figure 6, l'élément 52 est l'unique partie du dispositif qui se déplace, soit pour aligner l'ouverture 52a et l'orifice 11a, le jet d'encre pouvant alors sortir normalement de la buse 51, soit au contraire pour interrompre ce jet.

Le dispositif de la présente invention permet donc d'interrompre et de rétablir rapidement un jet d'encre émanant de la buse d'une imprimante à projection d'encre, et d'isoler de façon étanche la tête d'impression de l'imprimante lorsque cette dernière est mise hors fonction, de manière à empêcher l'air de pénétrer à l'intérieur de la buse et de provoquer la formation d'obstructions.

**Revendications**

1. Vanne d'arrêt pour imprimante à projection d'encre du type comprenant une buse (11) d'éjection de gouttelettes d'encre comportant une surface d'appui (11a) définissant un orifice de sortie, ladite vanne comprenant un élément (21) disposé à proximité immédiate de ladite surface d'appui et se déplaçant par rapport à celle-ci entre une première position, dans laquelle une suite de gouttelettes d'encre peut sortir librement de ladite buse, et une seconde position, dans laquelle ledit élément bouche de façon étanche l'orifice de sortie (11b) de la buse, ladite surface d'appui (11a) de la buse (11) constituant un siège pour ledit élément (21) lorsque celui-ci occupe ladite seconde position, et des moyens (30) permettant d'appliquer ledit élément (21) contre ladite surface d'appui, au moins lorsqu'il se trouve dans ladite seconde position, de manière à boucher ledit orifice de sortie (11b) de la buse de façon étanche, ladite vanne étant caractérisée en ce que ledit élément (21) est placé sur la face aval de ladite surface d'appui (11a), en ce que ledit élément (21) est déplacé de ladite première position à ladite seconde position par translation dans un plan sensiblement perpendiculaire à l'axe de ladite buse (11) et en ce que ledit élément (21) lors de son déplacement, se trouve appliqué contre ladite surface d'appui (11a).

2. Vanne d'arrêt selon la revendication 1, caractérisée en ce que ledit élément (21) comporte une ouverture (26) qui peut être alignée avec ledit orifice de sortie (11b) lorsque ledit élément occupe ladite première position.

3. Vanne d'arrêt selon la revendication 2, caractérisée en ce que ledit élément (21) est un élément mince, élastique et de forme arquée.

4. Vanne d'arrêt selon la revendication 3, caractérisée en ce que les bords longitudinaux (22, 23) dudit élément coulissent dans des guides (24, 25) de maìnère à permettre son passage de ladite première position à ladite seconde position et vice-versa.

5. Vanne d'arrêt selon la revendication 4, caractérisée en ce que lesdits guides (24, 25) comprennent une paire de projections (12a, 12b) séparées l'une de l'autre et comportent des rainures (24, 25) définissant le parcours suivi par ledit élément.

6. Vanne d'arrêt selon la revendication 4, caractérisée en ce que lesdits guides sont constitués par des rainures (42) que comporte ladite buse (11) et dans lesquelles coulissent les bords latéraux (44, 45) dudit élément (43).

7. Vanne d'arrêt selon la revendication 6, caractérisée en ce que lesdits bords latéraux (44, 45) dudit élément sont tournés vers l'intérieur.

8. Vanne d'arrêt selon la revendication 2, caractérisée en ce que ledit élément est maintenu en contact avec ladite surface d'appui définissant ledit orifice de sortie, au moyen d'une plaque de pression (53).

9. Vanne d'arrêt selon l'une des revendications 1 à 8, caractérisée en ce qu'elle comprend un mécanisme moteur (30) destiné à provoquer le déplacement dudit élément entre lesdites première et seconde positions.

10. Vanne d'arrêt selon la revendication 9, caractérisée en ce que ledit mécanisme moteur (30) se trouve à une distance déterminée dudit élément (21) lorsqu'il n'est pas excité.

**Patentansprüche**

1. Absperrventil für Tintenstrahldrucker vom Typ, der eine Düse (11) zum Herausschleudern von Tintentropfen besitzt, welche eine Ausgangsöffnung (11b) bestimmende Auflagefläche (11a) aufweist, wobei das genannte Ventil ein in unmittelbarer Nähe der genannten Auflagefläche angebrachtes Teil (21) enthält, das sich gegenüber derselben zwischen einer ersten Lage, in welcher eine Reihe von Tintentropfen frei aus der genannten Düse austreten kann, und einer zweiten Lage, in welcher das genannte Teil die Ausgangsöffnung (11b) der Düse dicht verschliesst, verschiebt, wobei die genannte Auflagefläche (11a) der Düse (11) eine Aufnahme für das genannte Teil (21) bildet, wenn dasselbe die genannte zweite Lage einnimmt, und Mittel (30), die es ermöglichen, das genannte Teil (21) gegen die genannte Auflagefläche zu drücken, zumindest, wenn es sich in der genannten zweiten Lage befindet, um die genannte Austrittsöffnung (11b) der Düse dicht zu verschliessen, wobei das genannte Ventil dadurch gekennzeichnet ist, dass das genannte Teil (21) auf der abwärts gelegenen Seite der genannten Auflagefläche (11a) angeordnet ist, dass das genannte Teil (21) von der genannten ersten Lage durch Verschiebung in einer im wesentlichen rechtwinklig zur Achse der genannten Düse (11) gelegenen Ebene in die genannte zweite Lage transportiert wird und dass das genannte Teil (21) während seiner Verschiebung gegen die genannte Auflagefläche (11a) gedrückt wird.

2. Absperrventil nach Patentanspruch 1, dadurch gekennzeichnet, dass das genannte Teil (21) eine Offnung (26) aufweist, die mit der genannten Austrittsöffnung (11b) ausgerichtet werden kann, wenn das genannte Teil die genannte erste Lage einnimmt.

3. Sperrventil nach Patentanspruch 2, dadurch gekennzeichnet, dass das genannte Teil (21) ein dünnes, elastisches und bogenförmiges Teil ist.

4. Sperrventil nach Patentanspruch 3, dadurch gekennzeichnet, dass die Längsränder (22, 23) des genannten Teils in Führungen (24, 25) gleiten, um den Übergang desselben von der genannten ersten Lage in die genannte zweite Lage und umgekehrt zu ermöglichen.

5. Sperrventil nach Patentanspruch 4, dadurch gekennzeichnet, dass die genannten Führungen (24, 25) ein Paar Erweiterungen (12a, 12b) aufweisen, die voneinander getrennt sind und mit Nuten (24, 25) versehen sind, die den Durchlauf des genannten Teils bestimmen.

6. Sperrventil nach Patentanspruch 4, dadurch gekennzeichnet, dass die genannten Führungen aus Nuten (42) bestehen, welche die genannte Düse (11) enthält und in denen die Seitenränder (44, 45) des genannten Teils (43) gleiten.

7. Sperrventil nach Patentanspruch 6, dadurch gekennzeichnet, dass die genannten Seitenränder (44, 45) des genannten Teils nach innen gerichtet sind.

8. Sperrventil nach Patentanspruch 2, dadurch gekennzeichnet, dass das genannte Teil mit der genannten, die genannte Austrittsöffnung bestimmenden Auflagefläche mittels einer Andruckplatte (53) in Berührung gehalten wird.

9. Sperrventil nach einem der Patentansprüche 1 bis 8, dadurch gekennzeichnet, dass es eine Antriebsvorrichtung (30) enthält, die dazu dient, die Verschiebung des genannten Teils zwischen den genannten ersten und zweiten Lagen zu bewirken.

10. Sperrventil nach Patentanspruch 9, dadurch gekennzeichnet dass die genannte Antriebsvorrichtung (30) sich in einer bestimmten Entfernung von dem genannten Teil (21) befindet, wenn sie nicht eingeschaltet ist.

## Claims

1. Valve for an ink-jet printer of the type including a nozzle (11) for ejecting droplets of ink with a contact face (11a) forming an outlet orifice, said valve incorporating an element (21) positioned in the immediate vicinity of the contact face and moving with respect to the latter between a first position in which a series of ink droplets can flow freely from said nozzle, und a second position in which said element blocks and seals the nozzle outlet orifice (11b), said contact face (11a) of nozzle (11) forming a seat for said element (21) when the latter occupies said second position, and means (30) for holding said element (21) against said contact face, at least when it occupies said second position, so as to block and seal said nozzle outlet orifice (11b), said valve being characterized in that said element (21) is placed on downstream side of said contact face (11a), in that said element (21) is moved from said first position to said second position in a plane virtually perpendicular to axis of said nozzle (11), and in that said element (21), during its movement, is held against said contact face (11a).

2. Valve according to claim 1 characterized in that said element (21) has an opening (26) which can be aligned with said outlet orifice (11b) when said element occupies said first position.

3. Valve according to claim 2 characterized in that said element (21) is a thin, flexible, curved element.

4. Valve according to claim 3 characterized in that longitudinal edges (22, 23) of said element slide in guides (24, 25) enabling its changeover from said first position to said second position and vice-versa.

5. Valve according to claim 4, characterized in that said guides (24, 25) include a pair of extension pieces (12a, 12b) separate from each other and incorporating grooves (24, 25) establishing the path followed by said element.

6. Valve according to claim 4, characterized in that said guides are formed by grooves (42) in said nozzle (11) in which slide side edges (44, 45) of said element (43).

7. Valve according to claim 6, characterized in that said side edges (44, 45) of said element are folded inwards.

8. Valve according to claim 2, characterized in that said element is held in contact with said contact face forming said outlet orifice by means of a pressure plate (53).

9. Valve according to one of the claims 1 to 8, characterized in that it incorporates a drive system (30) for moving said element between said first and second positions.

10. Valve according to claim 9, characterized in that said drive system (30) is located at a specific distance from said element (21) when not energized.

0 017 669

FIG. 1

FIG. 2

FIG. 3

FIG. 4A

FIG. 4B

FIG. 5

FIG. 6